# EUROPEAN PATENT SPECIFICATION

(11) **EP 3 092 296 B1**
(45) Date of publication and mention of the grant of the patent: **19.06.2019**
(21) Application number: 15702586.7
(22) Date of filing: 06.01.2015
(51) Int. Cl.: C12G 1/00, C12G 1/06

(54) **SALMON-PINK WINE OBTAINED FROM WHITE GRAPES, WINEMAKING PROCESS, AND DERIVED PRODUCTS**
AUS WEISSEN TRAUBEN GEWONNENER LACHSROSAFARBENER ROTWEIN, WEINHERSTELLUNGSVERFAHREN UND ABGELEITETE PRODUKTE
VIN ROSÉ DE COULEUR SAUMON OBTENU À PARTIR DE RAISINS BLANCS, PROCÉDÉ DE VINIFICATION ET PRODUITS DÉRIVÉS

(30) Priority: 06.01.2014 PT 10738914
(43) Date of publication of application: 16.11.2016
(73) Proprietor: Universidade de Trás-os-Montes e Alto Douro, 5000-911 Vila Real (PT); Adega Cooperativa de Figueira de Castelo Rodrigo, 6440-108 Figueira de Castelo Rodrigo (PT); Da Cruz Gonçalves da Silva, Jenny Andrea, 3100-462 Pombal (PT)
(72) Inventor: DA CRUZ GONÇALVES DA SILVA, Jenny Andrea, P-3100-462 Pombal (PT); FERREIRA MILHEIRO NUNES, Fernando Hermínio, P-5000-801 Vila Real (PT); GIL COSME MARTINS, Maria Fernanda, P-5000-801 Vila Real (PT)
(74) Representative: Ferreira, Maria Silvina
(86) International application number: PCT/IB2015/050093
(87) International publication number: WO 2015/101968

(56) References cited:
- FEI HE ET AL: "Biosynthesis of Anthocyanins and Their Regulation in Colored Grapes", MOLECULES, vol. 15, no. 12, 9 December 2010 (2010-12-09), pages 9057-9091, XP055041352, DOI: 10.3390/molecules15129057
- DIETMAR KAMMERER ET AL: "Polyphenol Screening of Pomace from Red and White Grape Varieties ( Vitis vinifera L.) by HPLC-DAD-MS/MS", JOURNAL OF AGRICULTURAL AND FOOD CHEMISTRY, vol. 52, no. 14, 1 July 2004 (2004-07-01), pages 4360-4367, XP055176548, ISSN: 0021-8561, DOI: 10.1021/jf049613b
- GHOLAMI M, COOMBE B: "Occurrence of anthocyanin pigments in berries of the white cultivar Muscat Gordo Blanco (Vitis vinifera L.)", AUST J GRAPE WINE RES, no. 1, 1995, pages 67-70, XP008175477,
- CARLA MARIA OLIVEIRA ET AL: "Oxidation mechanisms occurring in wines", FOOD RESEARCH INTERNATIONAL, ELSEVIER APPLIED SCIENCE, BARKING, GB, vol. 44, no. 5, 27 March 2011 (2011-03-27) , pages 1115-1126, XP028375001, ISSN: 0963-9969, DOI: 10.1016/J.FOODRES.2011.03.050 [retrieved on 2011-04-03]
- K SLINKARD ET AL: "Phenol content of grape skins and the loss of ability to make anthocyans by mutation", VITIS, vol. 23, 1 January 1984 (1984-01-01), pages 175-178, XP055176851, cited in the application

## Description

### Technical domain

The present application relates to a wine obtained from white grape varieties in which the final colour of the wine is salmon-pink, as well as to the respective obtaining process. Additionally, it further relates to its derivative products such as a semi-sparkling wine obtained from white grapes with salmon-pink colour and white sparkling wine with salmon-pink colour.

### Background

The grapes for the wine production are classified as white and red varieties according to the colour of their skin (Slinkard, K. W.; Singleton, V. L. (1984) Phenol content of grape skins and the loss of ability to make anthocyanins by mutation. Vitis, 23, 175-178.). The colour of the grapes is associated with the anthocyanin accumulation capacity in the skin (red varieties) and in some Tenturier varieties in the pulp itself (He, F.; Mu, L.; Yan, G.-L.; Liang, N.-N.; Pan, Q.-H.; Wang, J.; Reeves, M. J.; Duan, C.-Q. (2010) Biosynthesis of Anthocyanins and Their Regulation in Colored Grapes. Molecules, 15, 9057-9091). Thus, the colour of the anthocyanins in solution is dependent on its concentration, pH and the free sulphur dioxide concentration (Iacobucci, G. A.; and SWEENY, J. G. (1983) The chemistry of anthocyanins, anthocyanidins and related flavylium salts. Tetrahedron, 39, 19, 3005-3038.). The resulting wines are classified as white or reds according to the origin of the grapes from which they are elaborated. White wine is obtained from the use of white grape varieties and the red wine is obtained from red grape varieties and/or Tenturier or a mixture of red and/or Tenturier and white grapes. As an example, rose wines are wines made from red grapes, wherein the conditions of preparation provide a lower transfer of anthocyanins from the grape skins to the must/wine in fermentation by reducing the maceration time of the solid parts (skins and grape pips) with the must/wine (Ribéreau Gayon et al., 2006). The anthocyanins content of a rose wine can range from 35 to 160 mg of anthocyanins per liter (Murat, M._L., Tominaga, T.2003), which confers it a colour that can range from a reddish to an oil tone. DIETMAR KAMMERER ET AL: "Polyphenol Screening of Pomace from Red and White Grape Varieties (Vitis vinifera L.) by HPLC-DAD-MS/MS", JOURNAL OF AGRICULTURAL AND FOOD CHEMISTRY, vol. 52, no. 14, 1 July 2004 (2004-07-01), pages 4360-4367, XP055176548 pertains to polyphenol screening of pomace from red and white grapes. It discloses that the presence of minute amounts of anthocyanins detected in the peels of some white cultivars cannot be ascribed to an admixture of red grapes during mashing because the pomace samples were visually controlled during sieving to separate the skins from the seeds. GHOLAMI M, COOMBE B: "Occurrence of anthocyanin pigments in berries of the white cultivar Muscat Gordo Blanco (Vitis vinifera L.)", AUST J GRAPE WINE RES, no. 1, 1995, pages 67-70, XP008175477 discloses that rose coloration of skin was observed to sometimes develop late during ripening on the normally white grape berries of cv. Muscat Gordo Blanco.

The white grape varieties are described as not having the ability to synthesize anthocyanins and, as such, wines that use this type of grapes have no anthocyanins in their chemical composition. In this sense, therefore, there is no motivation to use white grapes for obtaining alcoholic beverages with tones such as the salmon-pink colour, since this colour would be more easily achieved using red grapes. However, there is a large current market trend of wines for the consumption of innovative products, either in the production process or in their sensory characteristics. This change in the market trend has been seen over the past 10 years with the significant increase in the consumption of rose wine that has a differentiated colour and flavour compared with traditional wines such as red wine and white wine, with a reddish to an oil colour.

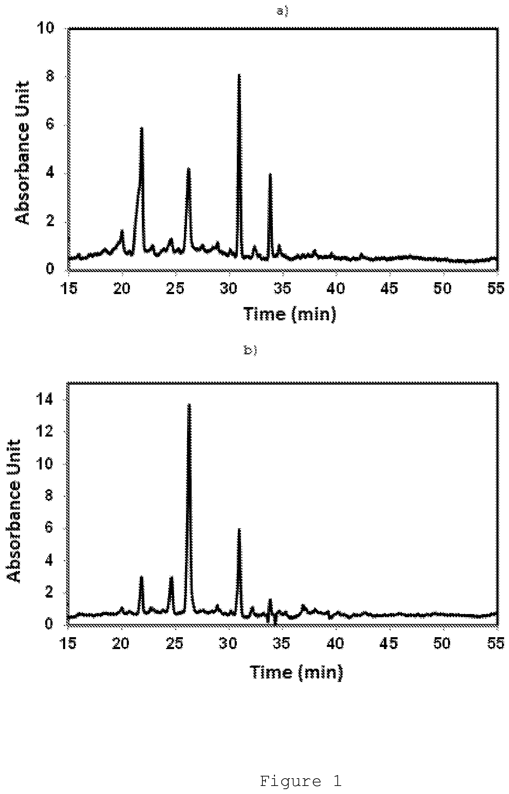

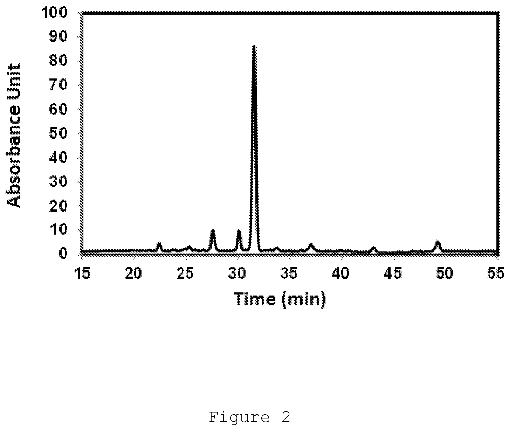

The present application describes the use of white grape varieties, for example Síria, able to synthesize small quantities of anthocyanins that are distributed between the pulp and the skin (Figure 1) when producing the wine. However, before you can get a wine with a salmon-pink colour from white grape varieties it is necessary to maintain the proper ripening conditions and elaboration under reducing conditions. Only in this way it is possible to prevent degradation of anthocyanins during the elaboration process of this white wine, resulting in a wine obtained from white grapes with an anthocyanin content of up to 75 mg/L (Figure 2), which translates in obtaining a wine obtained from white grapes with a salmon-pink colour, as described herein.

The resulting wine obtained from white grapes of salmon-pink colour, that is an object of the present application, has a number of advantages over the white wines produced from the same varieties of white grapes:
- the wine obtained from white grapes with salmon-pink colour presents a chemical composition that is more similar to the original grape, requiring less processing such as fining operations for elimination of the compounds responsible for the colour, thereby reducing the costs of production;
- at the environmental level there is a reduction of the carbon footprint in the production of wine obtained from white grapes of salmon-pink colour due to the decrease and/or elimination of fining operations during its elaboration, thereby decreasing the number of technological operations as well as the use of oenological products and consequently the volume of wine lees;
- due to the need for less processing, this type of wine has a higher concentration of volatile compounds making the wine obtained from white grapes of salmon-pink colour a more aromatic wine than the corresponding white wines;
- the wine obtained from white grapes of salmon-pink colour presents more appealing features for today's consumers, from its colour to the means of production.

### Summary

The present application relates to a wine obtained from white grape varieties, wherein the final colour of the wine is salmon-pink, as well as its production process. The advantages over white wines are also presented.

In this context, the present application describes a wine obtained from white grapes comprising a total concentration of anthocyanins up to 75 mg/L.

In a preferred embodiment, said anthocyanins belong to the following group: delphinidin-3-O-glucoside and/or Cyanidin-3-O-glucoside and/or Petunidin-3-O-glucoside and/or Peonidin-3-O-glucoside and/or Malvidin-3-O-glucoside and/or its acetylated forms and/or coumaroyled and mixtures thereof.

In another preferred embodiment, the total concentration of said anthocyanins is between 0.1 and 75 mg/L.

In a preferred embodiment, the wine obtained from white grapes has a salmon-pink colour reflected in the following chromatic characteristics:
- luminosity (L*) between 88.0 and 99.0;
- red/green component (a*) between -1.0 and 22.0;
- yellow/blue component (b*) between 0.5 and 6.0;
- a chroma (C*) between 3.4 and 22.0;
- tone (H*) between -90° and 80°.

It is also an objective of the present application to provide alcoholic beverages obtained based on the wine obtained from white grapes described previously.

It is also an objective of the present application to provide a sparkling and semi-sparkling wine obtained based on the wine obtained from white grapes previously described.

The present application also describes the process for obtaining the wine obtained from white grapes previously described, which comprises the selection of white grape varieties wherein, at least, 5% by weight of white grapes used in the process have the capacity to naturally synthesize anthocyanins.

In a preferred embodiment the varieties used are chosen from the following groups: Siria and/or Malvasia Fina and/or Thompson seeless and/or Semillon and/or Chenin blanc and/or Loureiro and/or Albariño and/or Trajadura and/or Sauvignon blanc and/or Chardonnay or mixtures thereof.

### Brief Description of the Figures

For an easier understanding of the art, accompanying drawings are joined which represent preferred embodiments that however are not intended to limit the object of the present application.
**Figure 1** - Composition in anthocyanins of the pulp and skin of white grapes of the Síria variety.
**Figure 2** - Composition in anthocyanins of a wine obtained from white grapes, salmon-pink colour produced from white grapes of Síria variety.
**Figure 3** - Spectra transmittance in the visible spectra of the wine obtained from white grapes of salmon-pink colour with a total anthocyanin content of 0.81 mg/L and compared with white wine and chromatic parameters in the CIELab scale (L*, a*, b*, ΔE*) calculated from the spectrum transmittance according to the OIV-MA-AS2-11 Method of the International Organization of Vine and Wine (OIV of the french *Organisation Internationale de la Vigne et du Vin*)*.*
**Figure 4** - Ultraviolet-Visible spectra of anthocyanins present in the wine obtained from white grapes of salmon-pink colour produced from white grapes of Síria variety; 1) Delphinidin-3-*O*-glucoside; 2) Cyanidin-3-*O*-glucoside; 3) Petunidin-3-*O*-glucoside; 4) Peonidin-3-*O*-glucoside; 5) Malvidin-3-*O*-glucoside; 6) Delphinidin-3-*O*-(6-*O*-coumaroyl)-glucoside; 7) Cyanidin3-*O*-(6-*O*-coumaroyl)-glucoside; 8) Petunidin-3-*O*-(6-*O*-coumaroyl)-glucoside; 9) Peonidin-3-*O-*(6-*O*-coumaroyl)-glucoside; 10) Malvidin-3-*O*-(6-*O-*coumaroyl)-glucoside.
**Figure 5** - Tandem mass spectra with electrospray ionization of anthocyanins present in the wine obtained from white grapes of salmon-pink colour produced from white grapes of Síria variety; 1) MS² spectrum and 2) MS³ spectrum of Pelargonidin-3-*O*-glucoside; 3) MS² spectrum and 4) MS³ spectrum of Delphinidin-3-*O*-glucoside; 5) MS² spectrum and 6) MS³ spectrum of Cyanidin-3-*O*-glucoside; 7) MS² spectrum and 8) MS³ spectrum of Petunidin-3-*O*-glucoside; 9) MS² spectrum and 10) MS³ spectrum of Peonidin-3-*O*-glucoside; 11) MS² spectrum and 12) MS³ spectrum of Malvidin-3-O-glucoside.
**Figure 6** - HPLC chromatogram of the wine obtained from white grapes of salmon-pink colour after storage for one year.
**Figure 7** - Winemaking diagram obtained from white grapes of salmon-pink colour from grapes of white varieties with the ability to naturally synthesize anthocyanins.

### Description of the embodiments

Referring to the figures, some embodiments will now be described in more detail, which however are not intended to limit the scope of the present application.

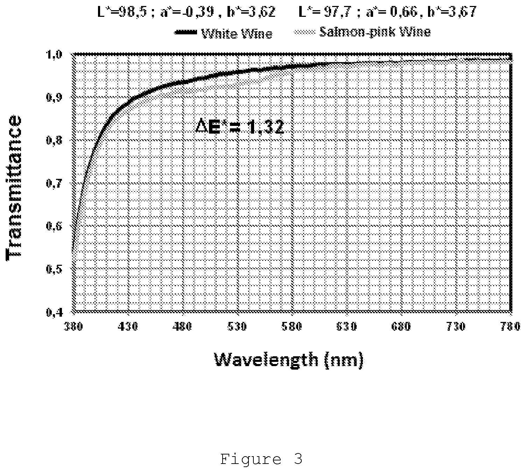

The wine obtained from white grapes of salmon-pink colour described in the present application is different in chromatic terms of all the white wines currently present in the market. In this context, the wine obtained from white grapes presents a salmon-pink colour despite being produced from white grapes including, but not limited to, Síria, Malvasia Fina, Thompson seeless, Semillon, Chenin blanc, Loureiro, Albariño, Trajadura, Sauvignon blanc and Chardonnay or mixtures thereof, wherein at least 5% by weight are white grapes that present the capacity to synthesize anthocyanins naturally, resulting in a wine obtained from white grape of salmon-pink colour due to the presence of a sufficiently high anthocyanin content to impart the colour (Figure 3). For example, the concentration of the phenolic compounds and anthocyanins present in the wine of salmon-pink colour by means of solid-phase extraction using a reverse-phase filling (C-18) and determination of the phenolic profile for reverse phase HPLC and detection using a photodiode detector set, the white grape variety Síria presents anthocyanins that are distributed between the pulp and the skin (Figure 1). Additionally, it is necessary that the process for obtaining the wine is carried out under reducing conditions to obtain a wine that has the desired chromatic characteristics. The chromatic characteristics of the salmon-pink wines, calculated from the respective spectra transmittance in the visible region between 380 to 780 nm, obtained with an interval of 5 nm using a glass cuvette with an optical path of 4 cm, using water as a reference to obtain the baseline. The transmittance spectrum is recalculated for a thickness of 1 cm prior to calculating the chromatic parameters. The chromatic parameters L* a* and b* were calculated for illuminant D65 and standard observer of 10° using the tristimulus of a colour stimulus X, Y and Z, using algorithms according to the OIV-MA-AS2-11 Method from OIV. The salmon-pink wine presents a luminosity L* between 88.0 and 99.0, a red/green component (a*) between -1.0 and 22.0, a yellow/blue component (b*) between 0.5 and 6.0, a chroma (C*) between 3.4 and 22.0 and a tone (H*) between -90° and 80°, conferred by the natural presence of anthocyanins, presenting the taste and aroma characteristics of a wine obtained from white grapes such as fruity aroma, apple, pear, banana, citrus, passion fruit and exotic and tropical fruits and fresh flavour.

The product of the present application is the result of applying a preparation process that allows to preserve the anthocyanins extracted from white grapes that have the ability to naturally synthesize them, wherein the thinning of the colour is possible, either by changing the concentration of anthocyanins by addition of fining agents, pH adjustment, measured potentiometrically using a selective pH glass electrode, and/or total and free sulphur dioxide levels, measured by iodometric titration after alkaline hydrolysis (total dioxide sulphur) or by direct iodometric titration (free sulphur dioxide) according to the MA-E-AS323-04-DIOSOU method from OIV prior to bottling. During the pressing process the anthocyanins are extracted from the grape and transferred to the must (Figure 2), which is immediately treated with sulphur dioxide to carry out the antioxidant, antioxidasic and antimicrobial action, at average levels from 60 to 80 mg/L in order to retain the anthocyanins naturally present in the must of the chemical oxidation processes (Oliveira, C. M.; Ferreira, A. C. S.; De Freitas, V.; Artur M. S. Silva, A. M. S. (2011) Oxidation mechanisms occurring in wines Food Research International 44, 1115-1126) or enzymatic such as oxidation by polyphenol oxidase or laccase (YOKOTSUKA, K.; SINGLETON, V. L. (1997) Disappearance of Anthocyanins as Grape Juice Is Prepared and Oxidized with PPO and PPO Substrates Am. J. Enol. Vitic., Vol. 48, No. 1,13-25; Macheix, J.-J.; Sapis, J.-C.; Fleuriet, A.; Lee, C. Y. (1991). Phenolic compounds and polyphenoloxidase in relation to browning in grapes and wines. Critical Reviews in Food Science and Nutrition, 30 (3) : 441-486.).

Ascorbic acid is also used as an antioxidant (up to 250 mg/L) in the wine-making process with the objective of oxygen removal, and protecting the volatile and chromatic fraction of the must and future wine. One may also use carbon dioxide (dry ice, carbonic snow and in liquid form) as well as liquid nitrogen, either alone or mixed together to create an inert atmosphere and handle the product protected from air. The addition of carbon dioxide in musts is carried out, preferably, up to a maximum of 3 g/L with a maximum overpressure that should be less than 1 bar at 20°C. The must coming preferably from the first pressings up to a maximum pressure of 1.5-2.0 bar, is decanted at a temperature between 4 to 12°C with the help of pectinolytic enzymes and addition of adjuvants such as gelatin, silica gel, casein, among others to the turbidity of 50 to 100 NTU. After racking and before the alcoholic fermentation, if necessary, one can proceed to the correction of the must (acidity and nutrients). Alcoholic fermentation is induced by the application of active dry yeast and fermented under controlled temperature between 10 and 20°C, as to decrease the process of oxidation of the phenolic compounds namely anthocyanins. The fermentation of the must/wine is considered finished upon the total depletion of sugars (up to a maximum of 2 g per liter of residual sugars). After alcoholic fermentation the wine obtained from white grapes of salmon-pink colour is stabilized by the traditional processes including filtration, cold stabilization, if necessary, protein stabilization and other types of stabilization if necessary. The anthocyanin content of the wine obtained from white grapes of salmon-pink colour can be tuned by adding fining agents but not exclusively by polyvinylpolypyrrolidone, adjustment of free sulphur dioxide content and/or pH to values between 3.0 and 3.4 adjusted by the addition of organic acids such as tartaric, malic, lactic acids among others, to obtain the salmon-pink chromatic characteristics characterized by a luminosity L* between 88.0 and 99.0, a red/green component (a*) between - 1.0 and 22.0, a yellow/blue component (b*) between 0.5 and 6.0, a chroma (C*) between 3.4 and 22.0 and a tone (H*) between -90° and 80°, due to the natural presence of anthocyanins between 0.1 and 75 mg/L.

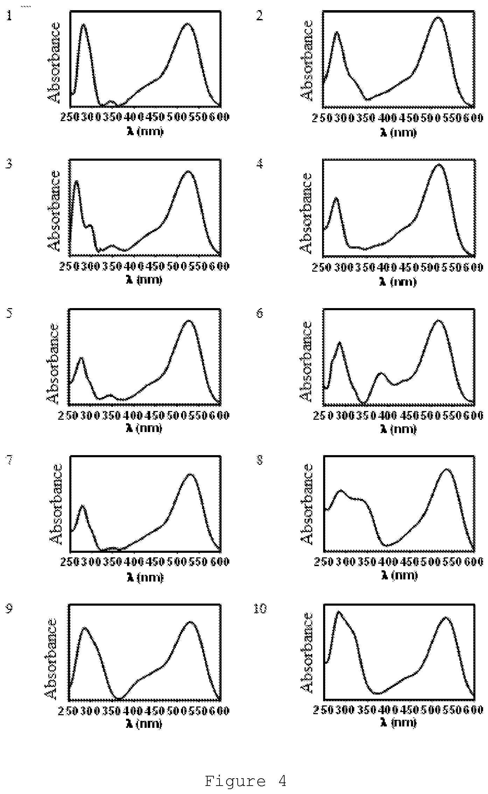

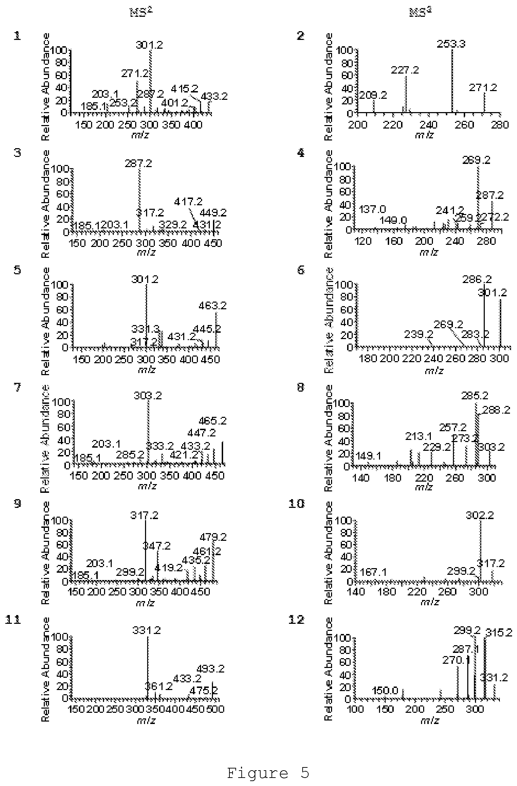

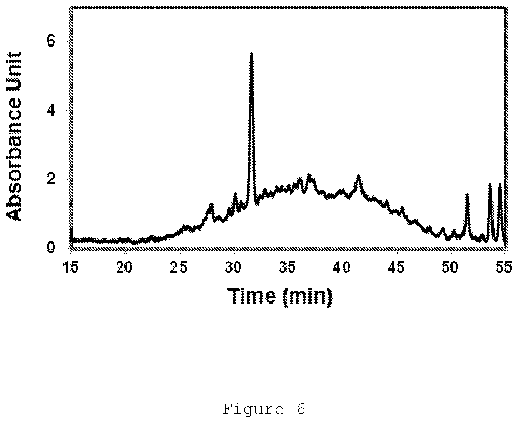

The resulting product of the present application, the wine obtained from white grapes of salmon-pink colour, presents a chemical composition different from traditional white wines with respect to its natural content in anthocyanins, which includes delphinidin-3-*O*-glucoside and/or Cyanidin-3-*O*-glucoside and/or Petunidin-3-*O*-glucoside and/or Peonidin-3-*O*-glucoside and/or Malvidin-3-*O*-glucoside and/or its acetylated forms and/or coumaroyled (Figure 4 and Figure 5), in a total concentration up to 75 mg/L in the wine prior to bottling.
The degradation of anthocyanins may occur since obtaining the must, winemaking and bottling processes due to its oxidation. The oxidation processes of the anthocyanins are mainly non-enzymatic due to the presence of oxygen, and in the case of must also from enzymatic origin, due to the presence of the polyphenoloxidase. The addition of sulphur dioxide to the must and the maintenance of its concentration at levels up to 50 mg/L during all the production process and bottling allows avoiding or slowing down the oxidation process of anthocyanins and thus obtain contents up to 75 mg/L of anthocyanins in the final wine obtained from white grapes. The antioxidant action of sulphur dioxide is mainly due to its reaction with quinones derived from the process of oxidation of the phenolic compounds naturally present in the wine, forming addition compounds more stable against oxidation, and thus preventing the discoloration action of the quinones over the anthocyanins. The decrease in the pH level may be accomplished by addition of various organic acids including tartaric, malic, citric, lactic acids, among others, also presents a conservation action of the anthocyanins because the lower the pH, in a range between 1 and 4, the more stable in solution the anthocyanins are. Furthermore, the decrease in pH allows obtaining a larger amount of dyestuff in solution due to the increase in the percentage of anthocyanins in its coloured form to more acidic pH. During the storage process there is a change of composition in anthocyanins of the wine obtained from white grapes of salmon-pink colour, as for example its polymerization, as can be seen by comparing Figure 2 corresponding to a wine obtained from white grapes of salmon-pink colour after its production and Figure 6 represents the same wine after 18 months of storage. During the storage there is a decrease in the content of monomeric anthocyanins up to more than 90% of the initial content of monomeric anthocyanins.
The wine obtained from white grapes of salmon-pink colour can be used as a base wine for the production of sparkling wine of salmon-pink colour, semi-sparkling wine obtained from white grapes of salmon-pink colour, and other products that traditionally are based in wine obtained from white grapes.
As previously mentioned the vast majority of varieties of white grapes do not have the ability to synthesize anthocyanins, resulting in a white wine without anthocyanins. However, even in the case of varieties of white grapes with the capacity for naturally synthesize anthocyanins, if there is no special care during the elaboration process, there will not be the opportunity to retain the anthocyanins until obtaining the final wine. Among the precautions in winemaking obtained from white grapes of salmon-pink colour the following are enumerated:
- adequate ripeness state of the grapes;
- controlled pressing process;
- no addition of oenological products with anthocyanins removal capacity;
- fermentation under controlled conditions of temperature and reducing power allowing the conservation of naturally present anthocyanins in the white grapes.
The final colour of the wine obtained from white grapes of salmon-pink colour is dependent on a number of chemical parameters including the concentration of anthocyanins, the pH of wine and the free sulphur dioxide content.
The thinning of the colour can be done either by changing the concentration of anthocyanins using fining agents such as exemplary, and non-exclusive, polyvinylpolypyrrolidone, bentonite, protein glues of animal origin such as gelatin, egg albumin, isinglass, casein, potassium caseinate and protein glues of vegetable origin such as pea protein and polysaccharide-based such as inert yeasts and the polysaccharides of the cell walls of the yeasts among which are mannoproteins and other polysaccharides such as carboxymethylcellulose, gum arabic, chitosan and others; pH value alteration of the wine by adding tartaric, malic, citric, lactic acids among others, and control of free sulphur dioxide level by the addition of potassium metabisulfite, potassium bisulfite, ammonium bisulfite, sulphur dioxide solution, sulphur dioxide, among others, up to 200 mg/L of total sulphur dioxide (when the wine presents a content lower than 5 g/L of reducing sugars) and 250 mg/L of total sulphur dioxide (when the wine presents a content greater of 5 g/L of reducing sugars).

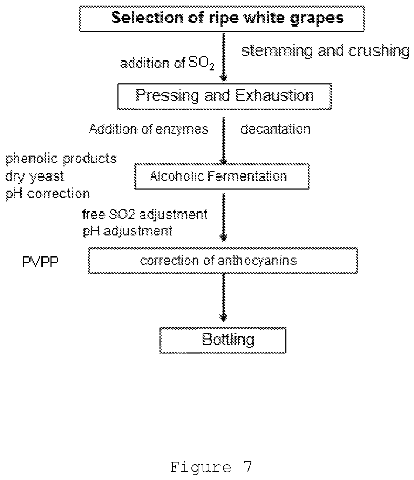

From the standpoint of obtaining this product the elaboration process is briefly summarized, in the scheme of Figure 7. In this elaboration process the ripening control of the grapes is made in order to have white grape varieties with a ripening degree and suitable anthocyanin content. The must should preferably be coming from the first pressings up to a maximum pressure of 1.5-2.0 bar and after decantation with the help of pectinolytic enzymes and the addition of adjuvants such as gelatin, silica gel, casein, among others, it is fermented by a traditional process of a white wine (fermentation off skins), with a controlled temperature between 10 and 20°C, in order to decrease the oxidation process of phenolic compounds, namely anthocyanins. The alcoholic fermentation is initiated by the application of active dry yeast, nutrients for alcoholic fermentation if necessary, pH and acidity correction if necessary, and fermented until complete depletion of sugars. After alcoholic fermentation, the wine stabilized by the traditional processes including filtration, cold stabilization, if necessary, protein stabilization and other types of stabilization if necessary. The anthocyanin content of the wine obtained from white grapes of salmon-pink colour may be adjusted by adding fining agents preferably, but not exclusively, to polyvinylpolypyrrolidone, adjustment of free sulphur dioxide content, and/or of pH to values between 3.0 and 3.4 adjusted by adding for example tartaric, malic, citric, lactic acids among others, until obtaining the desired colour characterized by a luminosity L* between 88.0 and 99.0, a red/green component (a*) between -1.0 and 22.0 a yellow/blue component (b*) between 0.5 and 6.0, a chroma (C*) between 3.4 and 22.0 and a tone (H*) between -90° and 80°, due to the natural presence of anthocyanin between 0.1 to 75 mg/L.

In summary, the use of reducing conditions during the elaboration process exclusively from white grape varieties in which at least 5% by weight are white grape varieties capable of naturally synthesizing anthocyanins allows obtaining a wine obtained from white grapes with a salmon-pink colour, with chromatic characteristics, characterized by a luminosity L* between 88.0 and 99.0, a red/green component (a*) between -1.0 and 22.0, a yellow/blue component (b*) between 0.5 and 6.0, a chroma (C*) between 3.4 and 22.0 and a tone (H*) between -90° and 80°, due to the natural anthocyanin presence at a concentration of 75 mg/L, thus being a unique and different product from all the existing on the market.

### Examples

Presented below are some non-restrictive examples of the process of obtaining wine obtained from white grapes of salmon-pink colour.

### Example 1:

Wine obtained from white grapes of salmon-pink colour elaborated exclusively from white grapes of Síria variety that comprises the following steps:
Selection of white grapes of Síria variety with an appropriate ripeness degree, obtaining the must by crushing and addition of sulphur dioxide depending on the health status of grapes, followed by pressing up to 1.5 bar. Decanting the must at a temperature of 8 to 12°C with the aid of pectinolytic enzymes and/or other oenological product if necessary, until turbidity of 75 NTU, followed by alcoholic fermentation at a controlled temperature of 10-20°C, obtaining wine obtained from white grapes of salmon-pink colour with natural content of anthocyanin of this variety that varies between 0.1 and 75 mg/L, corresponding to chromatic characteristics characterized by a luminosity L* between 88.0 and 99.0, a red/green component (a*) between -1.0 and 22.0, a yellow/blue component (b*) between 0.5 and 6.0, a chroma (C*) between 3.4 and 22.0 and a tone (H*) between -90° and 80°.

### Example 2:

Wine obtained from white grapes of salmon-pink colour elaborated exclusively from white grapes of Síria variety that comprises the following steps:
Selection of white grapes of Síria variety with an appropriate ripening degree, obtaining the must by crushing and addition of sulphur dioxide according to the health status of the feedstock, followed by pressing up to 2.0 bar. Decanting the must at a temperature of 8 to 12°C with the aid of pectinolytic enzymes and/or other oenological products if necessary, until turbidity of 75 NTU, followed by alcoholic fermentation at a controlled temperature of 10-20°C, thinning of the anthocyanins content by the use of polyvinylpolypyrrolidone to 10 mg/mL, corresponding to chromatic characteristics characterized by a luminosity L* of 91.7 ± 2.5, a red/green component (a*) of 7,320 ± 1,000, a yellow/blue component (b*) of 3.9450 ± 1.800, a chroma (C*) of 8.315 ± 2.980 and a tone (H*) of 28.32 ± 10.00°.

### Example 3:

Wine obtained from white grapes of salmon-pink colour elaborated exclusively from white grape of the Malvasia Fina varieties that comprises the following steps: Selection of white grapes of the Malvasia Fina variety with an appropriate ripeness degree, obtaining the must by crushing and addition of sulphur dioxide depending on the health status of the grapes, followed by pressing up to 1.5 bar. Decanting the must at a temperature of 8 to 12°C with the aid of pectinolytic enzymes and/or other oenological products if necessary, until turbidity of 75 NTU, followed by alcoholic fermentation at a controlled temperature of 10-20°C, obtaining of wine obtained from white grapes of salmon-pink colour with the natural content of anthocyanins of this variety ranging between 0.1 and 75 mg/L, corresponding to chromatic characteristics characterized by a luminosity L* between 88.0 and 99.0, a red/green component (a*) between -1.0 and 22.0, a yellow/blue component (b*) between 0.5 and 6.0, a chroma (C*) between 3.4 and 22.0 and a tone (H*) between -90° and 80°.

### Example 4:

Wine obtained from white grapes of salmon-pink colour elaborated exclusively from white grapes of Malvasia Fina variety that comprises the following steps:
Selection of white grapes of the Malvasia Fina variety with an appropriate ripeness degree, obtaining the must by crushing and adding sulphur dioxide according to the health status of the feedstock, followed by pressing up to 2.0 bar. Decantation of the must at a temperature of 8 to 12°C with the aid of pectinolytic enzymes and/or other oenological products if necessary, until turbidity of 75 NTU, followed by alcoholic fermentation at a controlled temperature of 10-20°C, thinning of anthocyanins content at 0.8 mg/mL, corresponding to chromatic characteristics characterized by a luminosity L* of 97.7 ± 1.00, a red/green component (a*) 0.659 ± 0.150, a yellow/blue component (b*) between 3.674 ± 0.500, a chroma (C*) of 3.733 ± 1.000 and a tone (H*) between 79.84 ± 2.00°.

### Example 5:

Wine obtained from white grapes of salmon-pink colour elaborated exclusively from white grapes of several white varieties that comprises the following steps:
Selection of white grapes wherein at least 5% presents synthesis capacity of anthocyanins with appropriate ripening degree and addition of sulphur dioxide according to the health status of the feedstock, followed by pressing up to 2.0 bar. Decantation of the must at a temperature of 8 to 12°C with the aid of pectinolytic enzymes and/or other oenological products if necessary, until turbidity of 75 NTU, followed by alcoholic fermentation at a controlled temperature of 10-20°C, obtaining wine obtained from white grapes with the natural content of anthocyanins of this variety ranging between 0.1 and 75 mg/L, corresponding to chromatic characteristics characterized by a luminosity L* between 88.0 and 99.0, a red/green component (a*) between - 1.0 and 22.0, a yellow/blue component (b*) between 0.5 and 6.0, a chroma (C*) between 3.4 and 22.0 and a tone (H*) between -90° and 80°.

### Example 6:

Wine obtained from white grapes of salmon-pink colour elaborated exclusively from white grapes of several white varieties that comprises the following steps:
Selection of white grapes wherein at least 5% presents capacity of anthocyanin synthesis with appropriate ripening degree and addition of sulphur dioxide according to the health status of the feedstock, followed by pressing up to 2.0 bar. Decantation of the must at a temperature of 8 to 12°C with the aid of pectinolytic enzymes and/or other oenological products if necessary, until turbidity of 75 NTU, followed by alcoholic fermentation at a controlled temperature of 10-20°C, thinning of anthocyanins content by the use of polyvinylpolypyrrolidone for 2 mg/mL, corresponding to chromatic characteristics characterized by a luminosity L* 96.9 ± 2.0, a red/green component (a*) 1.844 ± 0.500, a yellow/blue component (b*) of 3,979 ± 1,500, a chroma (C*) of 4.386 ± 2.000 and a tone (H*) between 65.14 ± 3.00°.

## Claims

1. Process for obtaining a wine presenting a salmon-pink colour from white grapes and comprising the following steps at proper ripening conditions and elaboration under reducing conditions:
- selection of white grape varieties wherein at least 5% by weight of the white grapes used have the capacity to naturally synthesize anthocyanins;
- first pressing of the grapes for the extraction of the anthocyanins from the grapes and transfer to the must;
- immediate addition of antioxidants, such as sulphur dioxide at average levels of 60 to 80 mg/L or ascorbic acid at levels up to 250 mg/L, to the must and/or addition of carbon dioxide to the must with a concentration up to a maximum of 3 g/L and with a maximum overpressure less than 1 bar at 20°C;
- decantation of the must, coming from the first pressing up to a maximum pressure of 2.0 bar, at a temperature between 4 to 12°C, with the help of pectinolytic enzymes and addition of adjuvants to achieve a turbidity of 50 to 100 NTU;
- alcoholic fermentation of the must with the addition of active dry yeast, under controlled temperature between 10 and 20°C, up to the depletion of sugars to a maximum of 2 g per liter;
- stabilization of the wine;
- thinning of the wine colour.

2. Process according to the preceding claim, wherein at least one variety is selected from the following group: Síria, Malvasia Fina, Thompson seeless, Semillon, Chenin blanc, Loureiro, Albariño, Trajadura, Sauvignon blanc, Chardonnay or mixtures thereof.

3. Process according to the preceding claims, wherein the antioxidant is carbon dioxide in dry ice form, carbonic snow form or in liquid form; liquid nitrogen, either alone or mixed together.

4. Process according to the preceding claims, wherein the adjuvant is selected from the group comprising gelatin, silica gel, casein.

5. Process according to the preceding claims, wherein the thinning of the wine colour comprises the addition of fining agents.

6. Process according to the preceding claim, wherein the fining agent are polyvinylpolypyrrolidone, bentonite, protein glues of animal origin such as gelatin, egg albumin, isinglass, casein, potassium caseinate and protein glues of vegetable origin such as pea protein and polysaccharide-based such as inert yeasts and the polysaccharides of the cell walls of the yeasts among which are mannoproteins and other polysaccharides such as carboxymethylcellulose, gum arabic, chitosan and others.

7. Wine presenting a salmon-pink colour obtainable by the process described in claims 1 to 6, from white grape varieties wherein at least 5% by weight of the grapes used have the capacity to synthesize anthocyanins naturally, comprising a total anthocyanins concentration that ranges between 0.1 and 75 mg/L.

8. Wine according to the preceding claim, wherein at least one anthocyanin is selected from the following group: delphinidin-3-*O*-glucoside, Cyanidin 3-*O-*glucoside, Petunidin-3-*O*-glucoside, Peonidin-3-*O-*glucoside, Malvidin-3-*O*-glucoside, their acetylated forms, their coumaroyled forms or mixtures thereof.

9. Wine according to claims 7 to 8, wherein comprises the following chromatic characteristics:
- luminosity between 88.0 and 99.0;
- red/green component between -1.0 and 22.0;
- yellow/blue component between 0.5 and 6.0;
- a chroma between 3.4 and 22.0;
- tone between -90° and 80°.

10. Sparkling wine obtainable based on the wine described in claims 7 to 9.

11. Semi-sparkling wine obtainable based on the wine described in claims 7 to 10.

## Patentansprüche

1. Verfahren zum Erhalten eines Weins aus weißen Trauben, der eine lachsrosa Farbe aufweist und bei geeigneten Reifebedingungen und der Erarbeitung unter reduzierenden Bedingungen aus folgenden Schritten besteht:
- Auswahl von weißen Traubensorten, wobei mindestens 5 Gewichtsprozente der verwendeten weißen Trauben die Kapazität besitzen, Anthocyane auf natürliche Weise zu synthetisieren;
- erste Pressung der Trauben zur Extraktion der Anthocyane aus den Trauben und Übertragung auf den Most;
- sofortige Zugabe von Antioxidantien zum Most, wie Schwefeldioxid mit durchschnittlichen Werten von 60 bis 80 mg/l oder Ascorbinsäure mit Werten bis zu 250 mg/l und/oder Zugabe von Kohlendioxid zum Most mit einer Konzentration bis maximal 3 g/l und einem maximalen Überdruck von weniger als 1 bar bei 20°C;
- Dekantieren des von der ersten Pressung kommenden Mosts bis zu einem maximalen Druck von 2,0 bar, bei einer Temperatur zwischen 4 und 12 °C, mithilfe von pektolytischen Enzymen und der Zugabe von Hilfsstoffen, um eine Trübung von 50 bis 100 NTU zu erreichen;
- alkoholische Gärung des Mosts unter kontrollierten Temperaturen zwischen 10 und 20°C mit der Zugabe von aktiver Trockenhefe, bis zu Abbau von Zuckern bis zu maximal 2 g pro Liter;
- Stabilisierung des Weins;
- Ausdünnung der Weinfarbe.

2. Verfahren gemäß dem vorstehenden Anspruch, wobei zumindest eine Sorte aus der folgenden Gruppe gewählt wird: Siria, Malvasia Fina, Thompson Seedless, Semillion, Chenin Blanc, Loureiro, Albarino, Trajadura, Sauvignon Blanc, Chardonnay oder deren Mischungen.

3. Verfahren gemäß den vorstehenden Ansprüchen, wobei das Antioxidan aus Kohlendioxid in Trockeneis-Form, Kohlendioxidschnee oder in flüssiger Form, flüssigem Stickstoff, entweder allein oder zusammen gemischt besteht.

4. Verfahren gemäß den vorstehenden Ansprüchen, wobei der Hilfsstoff aus der aus Gelatine, Kieselgel und Kasein bestehenden Gruppe gewählt wird.

5. Verfahren gemäß den vorstehenden Ansprüchen, wobei die Ausdünnung der Weinfarbe aus der Zugabe von Schönungsmitteln besteht.

6. Verfahren gemäß dem vorstehenden Anspruch, wobei folgende Schönungsmittel verwendet werden: Polyvinylpolypyrolidon, Bentonit, Protein-Leime tierischen Ursprungs, wie Gelatine, Eieralbumin, Hausenblase, Kasein, Kaliumkaseinat und Protein-Leime pflanzlichen Ursprungs, wie Erbsenprotein und Polysaccharid-basierte, wie inerte Hefen und die Polysaccharide der Zellenwände der Hefen, unter denen sich Mannoproteine und andere Polysaccharide wie Carboxymethylcellulose, Gummiarabikum, Chitosan und andere befinden.

7. Wein, der eine lachsrosa Farbe aufweist und durch die in den Ansprüchen 1 bis 6 beschriebenen Verfahren aus weißen Traubensorten gewonnen wird, wobei mindestens 5 Gewichtsprozente der verwendeten weißen Trauben die Kapazität besitzen, Anthocyane auf natürliche Weise zu synthetisieren, mit einer gesamten Anthocyan-Konzentration zwischen 0,1 und 75 mg/l.

8. Wein gemäß dem vorstehenden Anspruch, wobei mindestens ein Anthocyan aus der folgende Gruppe gewählt wird: Delphinidin-3-O-Glucosid, Cyanidin 3-0-Glucosid, Petunidin-3-O-Glucosid, Peonidin-3-O- Glucosid, Malvidin-3-O-Glucosid, ihren acetylierten Formen, ihren coumaroylen Formen oder deren Mischungen.

9. Wein gemäß den Ansprüchen 7 bis 8, der die folgenden farblichen Eigenschaften aufweist:
- Luminosität zwischen 88,0 und 99,0;
- rot/grün Komponente zwischen -1,0 und 22,0;
- gelb/blau Komponente zwischen 0,5 und 6,0;
- ein Chroma zwischen 3,4 und 22,0;
- einen Ton zwischen -90° und 80°.

10. Schaumwein, der auf Basis des in den Ansprüchen 7 bis 9 beschriebenen Weins erhalten wird.

11. Perlwein, der auf Basis des in den Ansprüchen 7 bis 10 beschriebenen Weins erhalten wird.

## Revendications

1. Procédé pour l'obtention d'un vin présentant une couleur rose saumonée à partir de raisins blancs et comprenant les étapes suivantes dans des conditions de maturation appropriées et d'élaboration dans des conditions réductrices :
- sélection de cépages blancs dans lesquels au moins 5% en poids des raisins blancs utilisés ont la capacité de synthétiser naturellement des anthocyanes ;
- premier pressage des raisins pour l'extraction des anthocyanes des raisins et transfert au moût ;
- addition immédiate d'antioxydants, tels que le dioxyde de soufre à des concentrations moyennes de 60 à 80 mg/L ou l'acide ascorbique à des concentrations supérieures à 250 mg/L, au moût et/ ou l'addition de dioxyde de carbone au moût avec une concentration allant jusqu'à un maximum de 3 g/L et avec une surpression maximale inférieure à 1 bar à 20°C ;
- décantation du moût, provenant du premier pressage jusqu'à une pression maximale de 2,0 bars, à une température comprise entre 4 et 12°C, à l'aide d'enzymes pectolytiques et d'addition d'adjuvants pour atteindre une turbidité de 50 à 100 NTU ;
- fermentation alcoolique du moût avec l'addition de levure sèche active, à une température contrôlée comprise entre 10 et 20°C, jusqu'à épuisement des sucres jusqu'à un maximum de 2 g par litre ;
- stabilisation du vin ;
- dilution de la couleur du vin.

2. Procédé selon la revendication précédente, dans lequel au moins une variété est sélectionnée parmi le groupe suivant : Siria, Malvasia Fina, Thompson seedless, Sémillon, Chenin blanc, Loureiro, Albariño, Trajadura, Sauvignon blanc, Chardonnay ou leurs mélanges.

3. Procédé selon les revendications précédentes, dans lequel l'antioxydant est le dioxyde de carbone sous forme de carboglace, sous forme de neige carbonique ou sous forme liquide ; l'azote liquide, soit seuls ou soit mélangés ensemble.

4. Procédé selon les revendications précédentes, dans lequel l'adjuvant est sélectionné parmi le groupe comprenant la gélatine, le gel de silice, la caséine.

5. Procédé selon les revendications précédentes, dans lequel la dilution de la couleur du vin comprend l'addition d'agents de collage.

6. Procédé selon la revendication précédente, dans lequel l'agent de collage est la polyvinylpolypyrrolidone, la bentonite, les colles protéiques d'origine animale telles que la gélatine, l'albumine d'oeuf, la colle de poisson, la caséine, le caséinate de potassium et des colles protéiques d'origine végétale telles que la protéine de pois et les bases de polysaccharide telles que les levures inertes et les polysaccharides des parois cellulaires des levures, parmi lesquels se trouvent les mannoprotéines et d'autres polysaccharides tels que la carboxyméthylcellulose, la gomme arabique, le chitosane et d'autres.

7. Vin présentant une couleur rose saumon pouvant être obtenue par le procédé décrit selon les revendications 1 à 6, à partir de cépages blancs, dans lequel au moins 5% en poids des raisins utilisés ont la capacité de synthétiser naturellement des anthocyanes, comprenant une concentration totale en anthocyanines comprise entre 0,1 et 75 mg/L.

8. Vin selon la revendication précédente, dans lequel au moins un anthocyane est sélectionné parmi le groupe suivant : élphinidine-3-0-glucoside, Cyanidine 3-0-glucoside, Pétunidine-3-0-glucoside, Péonidine-3-0-glucoside, Malvidine-3-0-glucoside, leurs formes acétylées, leurs formes coumaroylées ou leurs mélanges.

9. Vin selon les revendications 7 à 8, **caractérisé en ce qu'**il comprend les caractéristiques chromatiques suivantes :
- luminosité entre 88,0 et 99,0 ;
- composante rouge/ vert entre -1,0 et 22,0 ;
- composante jaune/ bleu entre 0,5 et 6,0 ;
- une saturation entre 3,4 et 22,0 ;
- une tonalité entre -90° et 80°.

10. Vin mousseux pouvant être obtenu à partir du vin décrit dans les revendications 7 à 9.

11. Vin mousseux pouvant être obtenu à partir du vin décrit dans les revendications 7 à 10.
